# EUROPEAN PATENT SPECIFICATION

(11) **EP 0 621 705 B1**
(45) Date of publication and mention of the grant of the patent: **16.09.1998**
(21) Application number: 94480010.1
(22) Date of filing: 09.02.1994
(51) Int. Cl.: H04L 12/24, H04L 29/06

(54) **Method for reducing SNMP instrumentation message flows**
Verfahren zur Verminderung des "SNMP"-Instrumentationsnachrichtenflusses
Procédé pour réduire le flux de messages d'instrumentation "SNMP"

(30) Priority: 22.03.1993 US 34068
(43) Date of publication of application: 26.10.1994
(73) Proprietor: International Business Machines Corporation, Armonk, N.Y. 10504 (US)
(72) Inventor: Chen, David De-Hui, Cary, NC 27513 (US); Mc Kenzie, William Frank Jr., Raleigh, NC 27615 (US); Meyer, Keith Irwin, Raleigh, NC 27615 (US); Temoshenko, Leo, Raleigh, NC 27612 (US)
(74) Representative: de Pena, Alain

(56) References cited:
- THE SIMPLE BOOK AN INTRODUCTION TO MANAGEMENT OF TCP/IP-BASED INTERNETS , ENGLEWOOD CLIFFS, US, pages 131-158, M.T:ROSE 'Mechanism: SNMP'
- CONF- NOMS '92. NETWORKS WITHOUT BOUNDS. IEEE 1992 NETWORK OPERATIONS AND MANAGEMENT SYMPOSIUM , vol. 2, 1992 MEMPHIS, US, pages 254-265, XP 000344700 S. RABIE ET AL. 'An integrated architecture for LAN/WAN Management'
- IEEE GLOBAL TELECOMMUNICATIONS CONFERENCE, vol. 2, 6 December 1992 ORLANDO, US, XP 000357707 N. AGOULMINE ET AL. 'A System Architecture for updating management information in heterogeneous networks '

## Description

The present invention relates to network management using the Simple Network Management Protocol (SNMP) and, more particularly, to a method of reducing the number of message flows to and from an Instrumentation in an SNMP device.

Data communication has become a fundamental part of computing. World-wide networks gather data about such diverse subjects as atmospheric conditions, crop production, and airline traffic. These networks evolved as independent entities without the ability, or, until recently, the need, to interconnect with one another. New technologies, generically named "internetworking", have emerged making it possible to interconnect many disparate physical networks and make them function as a coordinated unit. Using internetworking technologies, a host, for example, on one network, may traverse multiple networks and communicate with another host on a different network.

The size of an "internet", or group of interconnected networks, can vary quite significantly. For instance, the resulting network may be enormously large, such as the nation-wide DARPA (Defense Advanced Research Projects Agency)/NSF (National Science Foundation) Internet which connects most major research institutions, including universities, corporate and government labs. Conversely, the network may be relatively small, comprising only a single corporation's individual local area networks (LANs).

No matter the size of the network, it is clear that the task of effectively managing the resulting interconnected network is quite important and has been given a great deal of attention in the networking community. In managing a network, a network manager must keep track of the devices on the networks, monitor the network's performance and load, and diagnose and correct any problems.

While products that manage homogeneous networks have been available, managing heterogeneous networks is more complex and, until recently, no generally accepted heterogeneous network management standard existed. The Simple Network Management Protocol (SNMP), which originated as a means for managing the TCP/IP (Transmission Control Protocol/Internet Protocol) and Ethernet networks, has broadened rapidly since its monitoring and control transactions are completely independent of TCP/IP and Ethernet. SNMP only requires datagram transport mechanisms to operate.

Using SNMP, network administrators can address queries and commands to network nodes and devices. SNMP monitors network performance and status; controls operational parameters; and reports, analyzes and isolates these faults. The protocol accomplishes these functions by transporting management information between "Managers" and "Agents".

SNMP defines the following three basic components:
1. An Agent, a component housed within a managed network device such as a host, gateway, or terminal server. Each Agent stores management data and responds to the Manager's requests for this data, and may send a "TRAP", a special unsolicited SNMP command, to the Manager after sensing a prespecified condition.
2. A Manager, a component housed within a Network Management Station. The Manager queries/controls Agents using various SNMP commands.
3. A Management Information Base (MIB), a managed object data-base, accessible to Agents and manipulated via SNMP for network management application.

To carry out the Agent's and Manager's duties, SNMP specifies five types of commands or verbs, called Protocol Data Units (PDUs): GetRequest, GetNextRequest, SetRequest, GetResponse and Trap. (The SetRequest and Trap PDUs are unrelated to the present application and will not be discussed.) Agents inspect and retrieve the specified table values after receiving either a GetRequest or a GetNextRequest PDU from a Manager. Managers use GetRequest for retrieving single values. The GetNextRequest is issued by the Manager to begin a primitive block transfer and the Agent returns the selected data with a GetResponse verb.

The Simple Book : "An introduction to management of TCP/IP- based internets, Englewood Cliffs, US, Prentice Hall, Chapter 5, describes the advantages of the "get next" PDU of the SNMP protocol versus the simple "get" PDU. The manager, when sending a "get-next" reduces network traffic by coallescing several requests for the same operation into one. However, the traffic network needs to be further reduced as explained below.

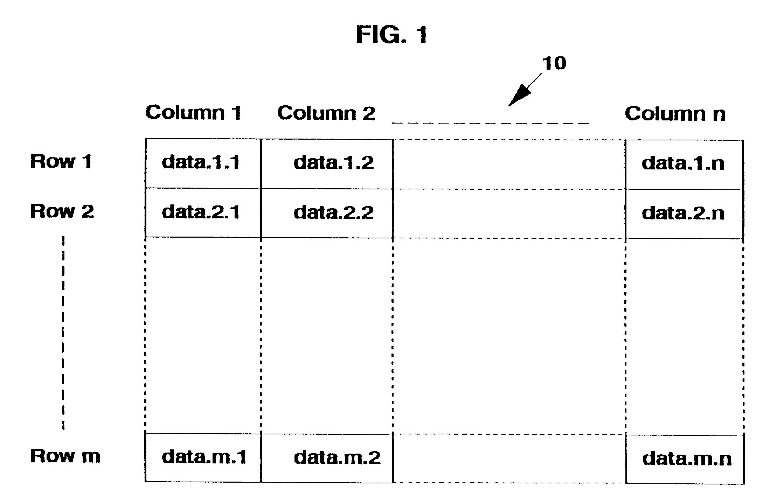

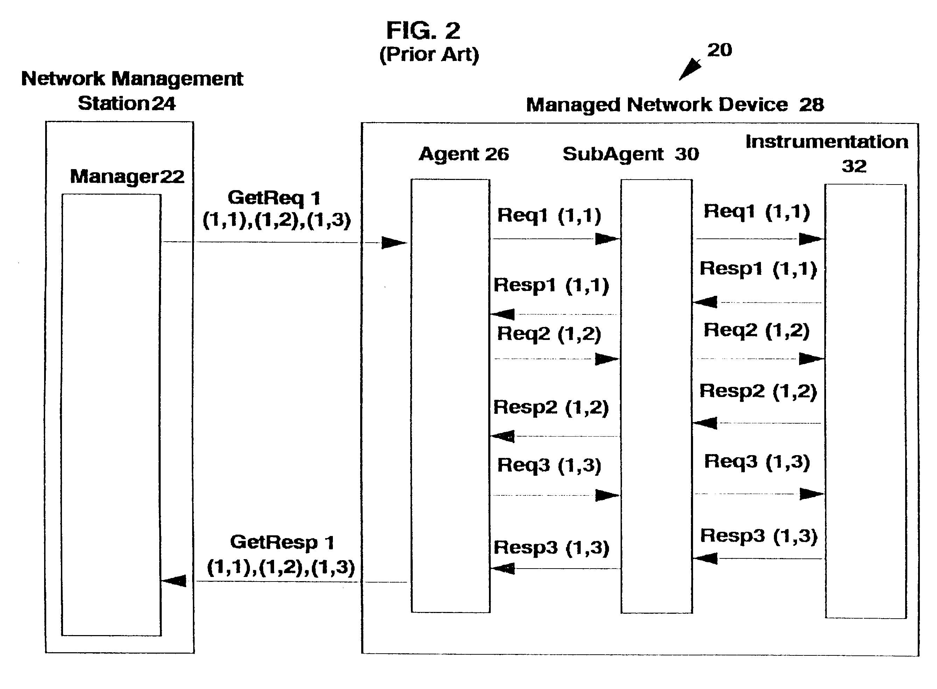

Conceptually, SNMP employs tables to store the information in the MIB. These tables consist of rows and columns. Figure 1 illustrates a typical SNMP table. Columns are attributes, or object types in SNMP terms, that characterize the resources. Each row represents an instance of the resource. An SNMP GetRequest or GetNextRequest of a single object allows a manager to retrieve an instance of the object. The SNMP GetRequest and GetNextRequest also allow the retrieval of a set of objects with one request. Although, SNMP does not restrict what objects should be requested in one PDU, most managers will retrieve information (either whole or a subset) from a row. The Agent treats each object in the PDU as a separate request and passes it to the SubAgent. This is demonstrated in Figure 2 as discussed below.

Figure 2 illustrates a system 20 conforming to SNMP. In order to assist in managing and organizing the vast amounts of data which need to be collected and maintained for access by the Manager 22 in the Network Management Station 24, the Agent 26 of the managed network device 28 may use one or more SubAgents (one SubAgent 30 shown) for manipulating the data items in the various tables. Each SubAgent may be responsible for a particular table or set of tables. In order to access the particular tables, the SubAgents issue commands to the managed network device Instrumentation 32, which actually maintains the physical data items.

In order to retrieve all the data items in a given row, the Manager would issue a GetRequest or GetNextRequest to the Agent. The command would specify the specific data location, i.e., (row 1, col. 1), (row 1, col. 2), . . . (row m, col. n) of the desired data items so that one PDU is issued for multiple data items. The Agent then individually passes a request for each data item to the SubAgent which, in turn, passes it to the Instrumentation. The Instrumentation responds for each request to the requesting SubAgent which, in turn, responds to the Agent. The Agent subsequently collects all the results and responds to the Manager the requested data item values, normally with a single GetResponse PDU.

This is shown in Figure 2. Manager 22 issues a single GetRequest PDU (GetReq 1) for the desired data items ((1, 1), (1, 2), (1, 3)). (Alternatively, the Manager may issue multiple PDUs specifying the desired data items.) Agent 26 receives this PDU and sends a first request for the first data item (Req 1 (1, 1)) to SubAgent 30, which, in turn, forwards it to Instrumentation 32. Instrumentation retrieves the data item from the table and sends it to SubAgent 30 (Resp 1 (1, 1)), which forwards it to Agent 26. Agent 26 then forwards the next request (Req 2 (1, 2)), and likewise Req 3 (1, 3), to the SubAgent 30 for the same retrieval process. When Agent 26 has received all of the data items, it sends them to Manager 22 via a single GetResponse PDU (GetResp 1 (1, 1), (1, 2), (1, 3)).

This one-for-one exchange between the SubAgent and the Instrumentation is costly in terms of processing time. Each request issued by the SubAgent to the Instrumentation consumes processing time which the Instrumentation would otherwise be devoting to another task, such as routing incoming datagrams, if the managed network device was a router, for example. If, for instance, the Manager wishes to retrieve a network device status table consisting of 1000 rows and 50 columns in order to provide a graphical user interface depicting a network map, the Instrumentation would be required to process 50,000 information requests.

A large number of exchanges between the SubAgent and the Instrumentation severely degrades the performance of the managed network device. During the time the Instrumentation is processing these information requests, in the case where the managed network device is a router, network traffic can not be routed. Thus, the more the device is managed using traditional methods, the less it is able to perform its primary routing/networking functions.

Additionally, when a single Manager PDU Request causes a large number of individual messages to be exchanged between the SubAgent and the Instrumentation, a great deal of time may elapse between the first message exchange and the last. During that time, conditions which the Instrumentation is monitoring may change. This is a problem as the Manager cannot be ensured that it has obtained a "snapshot" of the condition at one instant in time as the condition may or may not be dynamic.

Another problem with this prior art SNMP data retrieval system is that when a GetNextRequest is issued to the Instrumentation when at the end of a column of data, i.e., at the last row in the column, a "noSuchName" response is generated. A second GetNextRequest must be issued so that the first data item of the following column may be retrieved. In other words, where a table has "m" rows and "n" columns, a GetNextRequest (Row m, Col. x) where "x" is any column number no greater than "n", a noSuchName response is sent back to the SubAgent. Another GetNextRequest (0, Col. x+1) must be issued to Instrumentation for retrieving the data item located at (Row 1, Col. x+1). This additional message exchange between the Instrumentation and the SubAgent exacerbates the problem of high numbers of processing requests further distracting the Instrumentation from its primary responsibility.

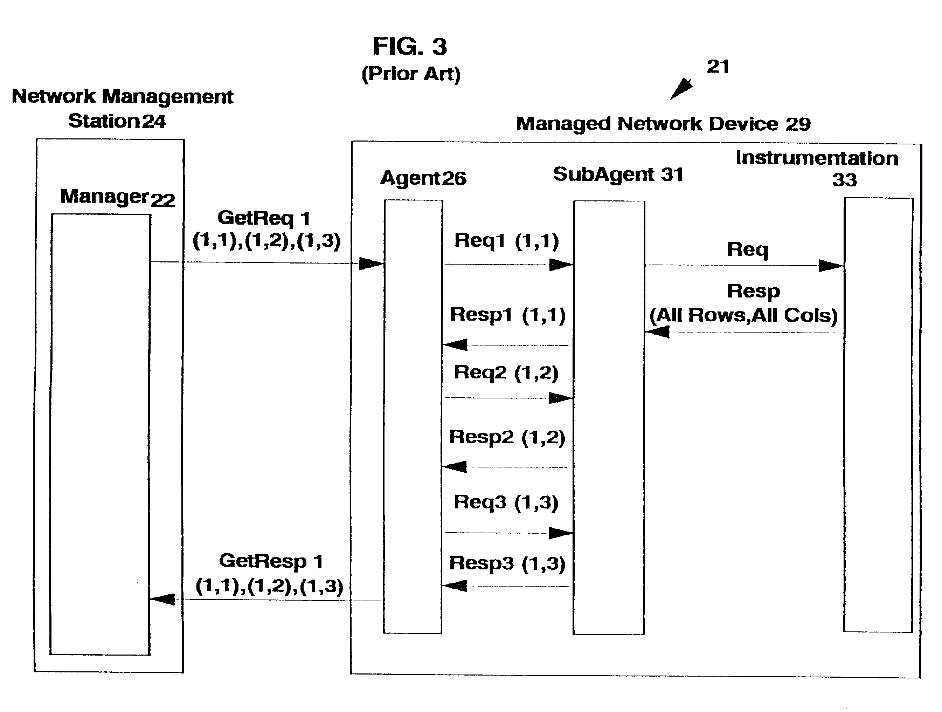

Figure 3 illustrates a prior art SNMP retrieval system at the other extreme. Manager 22 issues a GetRequest PDU (GetReq1 (1, 1), (1, 2), (1, 3)) to Agent 26 which sends individual requests for each data item to SubAgent 31. SubAgent 31 issues a generic Req command to Instrumentation 33 which responds by sending its entire database (All Rows, All Cols.) to SubAgent 31. SubAgent 31 sends the individual data items back to Agent 26 in response to requests which collects them for forwarding to Manager 22.

While reducing the individual SubAgent-Instrumentation message flows, this method of retrieving data from the Instrumentation is inefficient for a number of reasons. First, by the Instrumentation doing a complete "data dump" to the SubAgent whenever there is a data item request, the SubAgent is required to provide a great deal of internal storage. Duplicate copies of the entire database are maintained which is wasteful as the database may be huge. Second, often times, the data maintained by the Instrumentation is dynamic so that subsequent GetRequests from the Manager will result in inaccurate data retrieval from the SubAgent as the data stored therein is untimely. Finally, frequently, SubAgents protect against old, inaccurate data by dumping its stored data after a predetermined period of time. This merely causes further complete Instrumentation data dumps whenever a data item is requested.

### SUMMARY OF THE INVENTION

The invention relates to a method and apparatus for retreiving data items in a Simple Network Management Protocol (SNMP) managed device by a manager which reduce the number of instrumentation message flow. The method, according to the invention, is for retrieving data items from a table in the SNMP managed device means including an agent or an agent and a subagent, and an instrumentation, said instrumentation having at least one table having a plurality of rows and a plurality of columns, said at least one table having plurality of data items in corresponding table locations defined by said plurality of rows and said plurality of columns, said method characterized in that it includes the following steps:
a) said agent receiving a request issued by said manager for retrieving at least one data item from a table location defined by one of said rows and at least one of said columns;
b) said means requesting said instrumentation to retrieve all of said data items from said table in said one row;
c) said means receiving from said instrumentation all of said data items in said one row;
d) said means storing said data items from said one row in an internal storage area; and
e) said means responding with said at least one data item from said table location defined by said one row and said at least one column.

### BRIEF DESCRIPTION OF THE DRAWINGS

While the technical description concludes with claims particularly pointing out and distinctly claiming that which is regarded as the invention, details of a preferred embodiment of the invention may be more readily ascertained from the following technical description when read in conjunction with the accompanying drawings, where:

Fig. 1 is an illustration of table which may be used in a Simple Network Management Protocol (SNMP) managed device.

Fig. 2 is a block diagram illustrating the message exchanges occurring between a Manager, an Agent, a SubAgent and an Instrumentation during a traditional SNMP block transfer function.

Fig. 3 is a block diagram of another prior art SNMP data retrieval system illustrating the message exchanges occurring between a Manager, an Agent, a SubAgent and an Instrumentation during an SNMP block transfer.

Fig. 4 is a block diagram illustrating the message exchanges occurring between a Manager, an Agent, a SubAgent and an Instrumentation during an SNMP data retrieval process of the present invention.

Fig. 5 is a block diagram illustrating the message exchanges occurring between a Manager, an Agent, a SubAgent and an Instrumentation during another SNMP data retrieval process of the present invention.

### DETAILED DESCRIPTION OF THE PREFERRED EMBODIMENT

The method of the present invention is utilized in a system conforming to the Simple Network Management Protocol (SNMP). By using "look-ahead" algorithms, the method reduces the number of exchanged messages between the Instrumentation portion of the managed network device and the SubAgent portion of the managed network device during a data retrieval process. In particular, the method of the present invention takes advantage of the premise that, during the process of managing a network, many times the Manager will need to analyze groups of related data items from tables in the managed network device, rather than individual, isolated data items. For example, where the table is maintained with data items indicating errors or faults occurring with relation to the managed network device, i.e., a problem determination table, the Manager will need to analyze all or most of the fault indicating data in order to determine what is causing the various problems. So, where the Manager requests the retrieval of one data item, it is expected that the Manager will soon be requesting for retrieval of related data items. These related data items are normally grouped together in rows.

Moreover, data maintained by the Instrumentation is frequently dynamic in nature. The data retrieval system must, therefore, consider this so that accurate data is returned to the Manager. Finally, a Manager often needs a "snapshot", or a picture at one point in time, of a group of related items which it requests using a single GetRequest or GetNextRequest PDU. The present invention accounts for each of these considerations by providing a unique system and method of retrieving data from Instrumentation using a reduced number of message flows while providing accurate and timely data for the Manager.

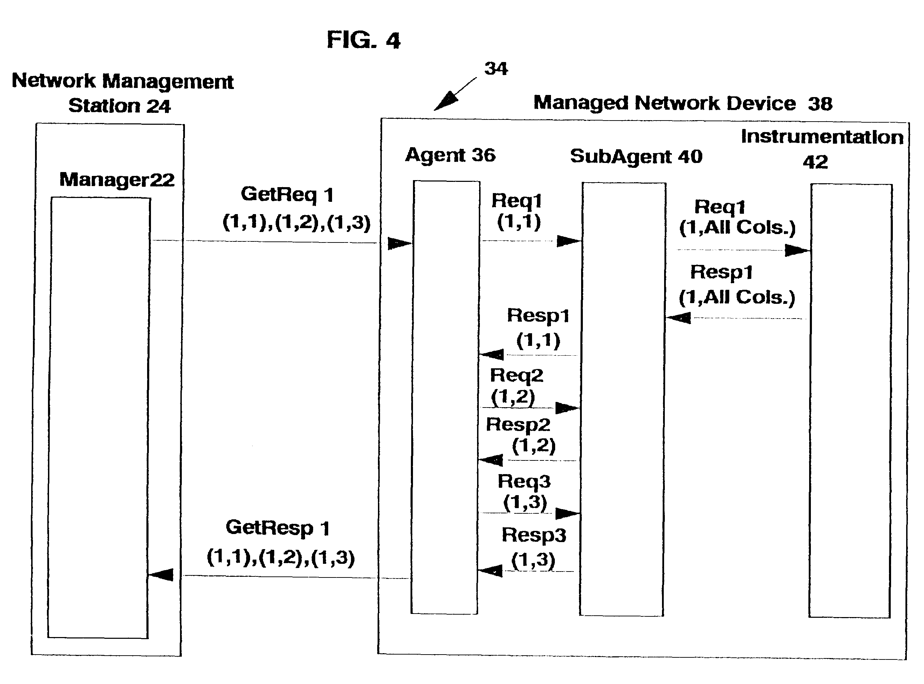

Figure 4 is a block diagram of an SNMP system 34 illustrating the message exchanges occurring between a Manager 22 in a Network Management Station 24, and Agent 36, a SubAgent 40 and Instrumentation 42 of the managed network device 38, during an SNMP data retrieval process of the present invention. This is illustrated as the preferred embodiment of the present invention although other equivalent configurations can work equally as well. For example, a SubAgent 40 is shown as acting as an interface between the Agent 36 and the Instrumentation 42. The SubAgent is unnecessary but rather merely preferred. The method and system of the present invention focus on the reduction of Instrumentation message flows - whether the Agent directly corresponds with the Instrumentation or has the SubAgent as a liaison is immaterial.

As can be seen, the Manager 22 issues a single GetRequest Protocol Data Unit (PDU) for three data items ((1, 1), (1, 2), (1, 3)) to the Agent 36 of the managed network device 38. Agent 36 forwards the request for the first data item (Req 1 (1, 1)) to SubAgent 40. SubAgent 40, instead of merely forwarding the identical request to Instrumentation 42, issues a request for retrieving the entire contents of row 1 (Req 1 (1, All Cols)). Instrumentation retrieves the contents of row 1 and sends them to SubAgent 40 (Resp 1 (1, All Cols)).

SubAgent 40 receives the contents of row 1 and stores them in an internal storage area which it maintains for future use. SubAgent 40 then forwards to Agent 36 (Resp 1 (1, 1)) the contents of the table location defined by row 1, column 1.

Agent 36 forwards the request for the next data item to SubAgent 40 (Req 2 (1, 2)). SubAgent 40, having stored the contents of row 1 in its internal storage area, retrieves the requested data items and returns it to Agent 36 (Resp 2 (1, 2)). The third data item request from the Agent 36 is handled in the same way by the SubAgent until a data item from another row is requested by a GetRequest. Once Agent 36 has received all responses, Agent 36, in turn forwards them in a single GetResponse PDU (GetResp 1 (1, 1), (1, 2), (1, 3)) to Manager 22.

As can clearly be seen, the method employed by the SubAgent significantly reduces the message flow to and from the Instrumentation when a series of data items are requested by the Manager during a single PDU. This frees up processing time for the Instrumentation to provide its primary services, such as protocol routing in the case of a router. When the Manager issues a new GetRequest or GetNextRequest PDU, a new series of data items are retrieved from the Instrumentation so that a "snapshot" of a particular condition may be obtained and so that the data items sent to the Agent are timely and accurate.

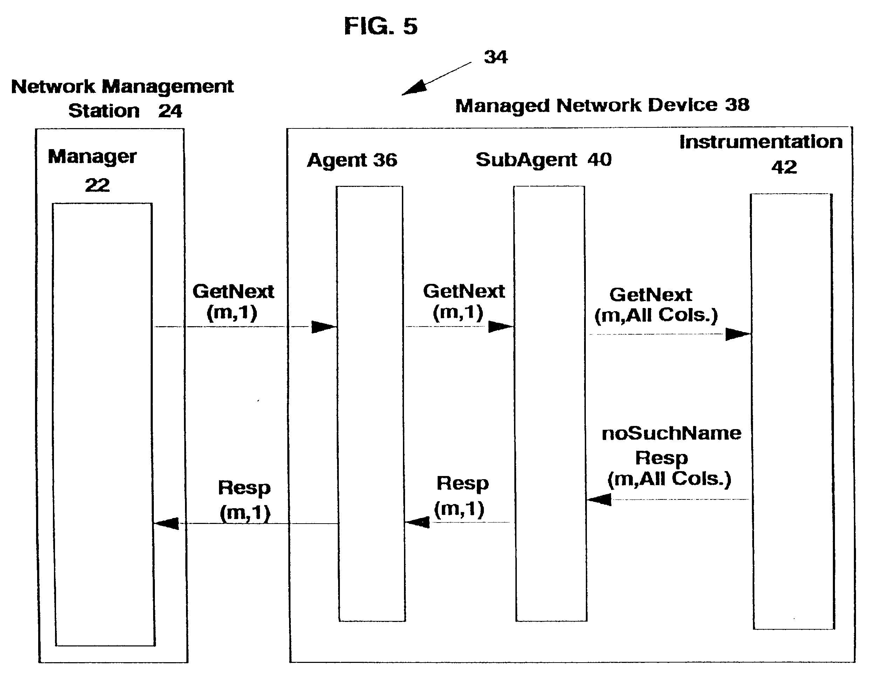

In the case where a Manager issues a series of GetNextRequests to the Agent and spill-over occurs, i.e., an end of column is reached, the method and system of the present further reduces message flows between the SubAgent and the Instrumentation as compared to traditional methods and systems. This is shown in Figure 5. Initially, the Manager requests the data item located in the last row (row m) of any column (column 1 is used as an example) using a GetNextRequest with the data item location specified (GetNext (m, 1)). Agent 36 forwards the GetNextRequest to SubAgent 40. SubAgent 40 issues a GetNextRequest for the entire next row (GetNext (m, All Cols.)) to Instrumentation 42. Because the last row has been reached, there is not a "next row" to be retrieved by Instrumentation 42. Instrumentation 42 returns to the SubAgent 40 a noSuchName response (as it normally does when reaching the end of a column). But, in addition, it returns the data items of the first row (Resp (1, All Cols.)) along with the noSuchName response. This allows SubAgent 40 to select the second column of the first row and forward that value to Agent 36 using Resp (1, 2) which in turn sends the requested value to Manager 22. This eliminates the traditionally necessary step of the SubAgent forwarding the noSuchName response to the Agent, requiring additional message flows between the SubAgent/lnstrumentation.

As can be seen, this portion of the method employed by the SubAgent further reduces the message flow between the SubAgent and the Instrumentation when the series of data items requested by the Manager spills over into the next column. This frees up additional processing time for the Instrumentation to provide its primary services.

Thus, it can be seen that the method and system of the present invention reduces the number of Instrumentation flows in a Simple Network Management Protocol (SNMP) device. The method and system use "look- ahead" algorithms whereby data items which have not yet been requested by the Agent (but are expected to be) are retrieved from Instrumentation. The method and system free up Instrumentation processing time by reducing flows. Further, the method and system can be easily expanded to return multiple rows as opposed to returning a single row which may result in an even greater reduction in flows to and from the Instrumentation. The number of rows returned would depend directly upon the Manager's GetRequest PDUs. For each new GetRequest or GetNextRequest PDU from the Manager, a new set of data is received from the instrumentation. Where data items from different rows are requested from a single GetRequest (or GetNextRequest) PDU, multiple rows containing the data items may be returned from the Instrumentation so that an accurate "snapshot" may be taken by the Manager.

While the invention has been particularly shown and described with reference to preferred embodiments thereof. it will be understood by those skilled in the art that various other changes in form and detail may be made without departing from the scope of the invention.

## Claims

1. A method for retreiving data items from a table in a Simple Network Management Protocol SNMP device by a manager, said device comprising means (36, 40) including an agent or an agent and a subagent, and an instrumentation (42), said instrumentation having at least one table having a plurality of rows and a plurality of columns, said at least one table having plurality of data items in corresponding table locations defined by said plurality of rows and said plurality of columns, said method characterized in that it includes the following steps:
a) said agent (36) receiving a request issued by said manager for retrieving at least one data item from a table location defined by one of said rows and at least one of said columns;
b) said means requesting said instrumentation to retrieve all of said data items from said table in said one row;
c) said means receiving from said instrumentation all of said data items in said one row;
d) said means storing said data items from said one row in an internal storage area; and
e) said means responding with said at least one data item from said table location defined by said one row and said at least one column.

2. The method according to Claim 1 wherein said means (36, 40) are an agent (36).

3. The method according to Claim 1, in which said means (36, 40) include an agent (36) and a subagent (40), said method being characterized in that:
• it includes, between step a and step b the sub-step of:
said agent sending a request to said subagent for retrieving one data item from a table location defined by said one row and one of said at least one column;
• step b is performed by said subagent;
• step c is performed by said subagent;
• step d is performed by said subagent;
said method being further characterized in that
• it includes, between step 4 and step 5 the sub-step of:
said subagent sending to said agent said one data item from said table location defined by said one row and said one column;
• step e is performed by said agent.

4. The method according to Claim 3 further comprising the following steps:
• said subagent receiving from said agent a second request for retrieving a data item from a table location defined by said one row and another of said columns
• said agent retrieving from said subagent internal storage area said data item from said table location defined by said first row and said another column;
• said subagent sending to said agent said data item from said table location defined by said first row and said another column.

5. The method according to Claim 2 or Claim 4, said one at least table having first through last rows and first through last columns, said method further comprising for said agent according to Claim 2 or said subagent according to Claim 4 the following steps:
• receiving a request for retrieving the next data item following the data item in a table location defined by one of said columns and said last row;
• requesting said instrumentation to retrieve the data items in the next row;
• receiving from said instrumentation the data items in said first row;
• responding by the data item in the table location defined by said first row and the next column.

6. A Simple Network Management Protocol SNMP device comprising an agent (36) and an instrumentation (42), said instrumentation having at least one table having a plurality of rows and a plurality of columns, said at least one table having plurality of data items in corresponding table locations defined by said plurality of rows and said plurality of columns, said agent for retrieving said data items from said table characterized by:
• means for receiving the said request issued by the said manager for retrieving at least one data item from a table location defined by a first of said plurality of rows and at least one of said columns;
• means for requesting said instrumentation to retrieve all of said data items from said table in said first row;
• means for receiving from said instrumentation all of said data items in said first row;
• an internal storage area for storing said data items from said first row; and
• means for sending said at least one data item from said table location defined by said first row and said at least one column.

7. A device according to Claim 6, characterized by a subagent between said agent and said instrumentation, said subagent corresponding with instrumentation, and comprising the following means:
• means for receiving a request from said agent for retrieving a data item from a table location defined by a first of said plurality of rows and one of said columns;
• means for requesting said instrumentation to retrieve all of said data items from said table in said first row;
• means for receiving from said instrumentation all of said data items in said first row;
• an internal storage area for storing said data items from said first row; and
• means for sending to said agent said data item from said table location defined by said first row and said one column.

8. A device, according to Claim 6 characterized by said subagent comprising the following means:
• means for receiving from said agent a second request for retrieving a data item from a table location defined by said first row and another of said columns;
• means for retrieving from said subagent internal storage area said data item from said table location defined by said first row and said another column;
• and means for sending to said agent said data item from said table location defined by said first row and said another column.

9. A device, according to Claim 8, said one at least table having first through last rows and first through last columns, said device characterized by said subagent comprising the following means:
• means for receiving a request for retrieving a data item from a table location defined by said last row and one of said columns;
• means for responding by said data item from said table location defined by said last row and said one column;
• means for receiving a request for retrieving the next data item;
• means for requesting said instrumentation to retrieve the data items in the next row;
• means for receiving from said instrumentation the data items in the first row; and
• means for responding by said data item from said table location defined by said first row and said following column.

10. A device according to Claim 8, wherein said device is a router.

## Patentansprüche

1. Ein Verfahren zum Abrufen von Datenelementen aus einer Tabelle in einem Gerät mit einfachem NetzmanagementProtokoll (SNMP) durch einen Verwalter, wobei das genannte Gerät Mittel (36, 40) umfaßt, die einen Agenten oder einen Agenten und einen Subagenten umfassen, und eine Instrumentation (42), wobei die genannte Instrumentation mindestens eine Tabelle mit einer Vielzahl von Reihen und einer Vielzahl von Spalten hat, die genannte mindestens eine Tabelle eine Vielzahl von Datenelementen an entsprechenden Tabellenstellen hat, die durch die genannte Vielzahl von Reihen und die genannte Vielzahl von Spalten definiert werden, wobei das genannte Verfahren dadurch gekennzeichnet ist, daß es die folgenden Schritte umfaßt:
a) der genannte Agent (36) empfängt eine Anforderung, die von dem genannten Verwalter ausgegeben wurde, mindestens ein Datenelement von einer Tabellenstelle abzurufen, die durch eine der genannten Reihen und mindestens eine der genannten Spalten definiert ist;
b) das genannte Mittel fordert die genannte Instrumentation auf, alle genannten Datenelemente aus der genannten Tabelle in der genannten einen Reihe abzurufen;
c) das genannte Mittel empfängt von der genannten Instrumentation alle genannten Datenelemente in der genannten einen Reihe;
d) das genannte Mittel speichert die genannten Datenelemente aus der genannten einen Reihe in einem internen Speicherbereich; und
e) das genannte Mittel antwortet mit mindestens einem Datenelement von der genannten Tabellenstelle, die durch die genannte eine Reihe und die genannte mindestens eine Spalte definiert wurde.

2. Das Verfahren nach Anspruch 1, bei dem das genannte Mittel (36, 40) ein Agent (36) sind.

3. Das Verfahren nach Anspruch 1, bei dem das genannte Mittel (36, 40) einen Agenten (36) und einen Subagenten (40) umfaßt, wobei das genannte Verfahren dadurch gekennzeichnet ist, daß:
• es zwischen Schritt a und Schritt b den folgenden Teilschritt umfaßt:
der genannte Agent sendet eine Anforderung an den genannten Subagenten, ein Datenelement von einer Tabellenstelle abzurufen, die durch die genannte eine Reihe und eine der genannten mindestens einen Spalte definiert ist;
• Schritt b von dem genannten Subagenten ausgeführt wird;
• Schritt c von dem genannten Subagenten ausgeführt wird;
• Schritt d von dem genannten Subagenten ausgeführt wird;
wobei das genannte Verfahren weiter dadurch gekennzeichnet ist, daß
• es zwischen Schritt 4 und Schritt 5 den folgenden Teilschritt umfaßt:
der genannte Subagent sendet an den genannten Agenten das genannte eine Datenelement von der genannten Tabellenstelle, die durch die genannte eine Reihe und die genannte eine Spalte definiert wurde;
• Schritt e von dem genannten Agenten ausgeführt wird.

4. Das Verfahren nach Anspruch 3, weiter folgende Schritte umfassend:
• der genannte Subagent empfängt von dem genannten Agenten eine zweite Anforderung, ein Datenelement von einer durch die genannte eine Reihe und eine weitere der genannten Spalten definierten Tabellenstelle abzurufen
• der genannte Agent ruft aus dem internen Speicherbereich des genannten Subagenten das genannte Datenelement von der genannten Tabellenstelle ab, die durch die genannte erste Reihe und die genannte weitere Spalte definiert wird;
• der genannte Subagent sendet an den genannten Agenten das genannte Datenelement von der genannten Tabellenstelle, die durch die genannte erste Reihe und die genannte weitere Spalte definiert wird.

5. Das Verfahren nach Anspruch 2 oder Anspruch 4, wobei die genannte mindestens eine Tabelle erste bis letzte Reihen und erste bis letzte Spalten hat, das genannte Verfahren weiter für den genannten Agenten nach Anspruch 2 oder den genannten Subagenten nach Anspruch 4 die folgenden Schritte umfaßt:
• Empfangen einer Anforderung, das nächste Datenelement, das auf das Datenelement in einer Tabellenstelle folgt, die durch eine der genannten Spalten und die genannte letzte Reihe definiert wird, abzurufen;
• Auffordern der genannten Instrumentation, die Datenelemente in der nächsten Reihe abzurufen;
• von der genannten Instrumentation die Datenelemente in der genannten ersten Reihe empfangen;
• Antworten durch das Datenelement in der Tabellenstelle, die durch die genannte erste Reihe und die nächste Spalte definiert wird.

6. Ein Gerät mit einfachem Netzmanagementprotokoll (SNMP), umfassend einen Agenten (36) und eine Instrumentation (42), wobei die genannte Instrumentation mindestens eine Tabelle mit einer Vielzahl von Reihen und einer Vielzahl von Spalten hat, die genannte mindestens eine Tabelle eine Vielzahl von Datenelementen an entsprechenden Tabellenstellen hat, die durch die genannte Vielzahl von Reihen und die genannte Vielzahl von Spalten definiert sind, der genannte Agent zum Abrufen der genannten Datenelemente aus der genannten Tabelle gekennzeichnet ist durch:
• Mittel zum Empfangen der genannten von dem genannten Manager ausgegebenen Anforderung, mindestens ein Datenelement von der Tabellenstelle abzurufen, die durch eine erste der genannten Vielzahl von Reihen und mindestens eine der genannten Spalten definiert ist;
• Mittel, um die genannte Instrumentation aufzufordern, alle genannten Datenelemente aus der genannten Tabelle in der genannten ersten Reihe abzurufen;
• Mittel, um von der genannten Instrumentation alle der genannten Datenelemente in der genannten ersten Reihe zu empfangen;
• einen internen Speicherbereich zum Speichern der genannten Datenelemente aus der genannten ersten Reihe; und
• Mittel, um das genannte mindestens eine Datenelement von der genannten Tabellenstelle, die durch die genannte erste Reihe und die genannte mindestens eine Spalte definiert wurde, zu senden.

7. Ein Gerät nach Anspruch 6, gekennzeichnet durch einen Subagenten zwischen dem genannten Agenten und der genannten Instrumentation, wobei der genannte Subagent mit der Instrumentation korrespondiert und die folgenden Mittel umfaßt:
• Mittel zum Empfangen einer Anforderung von dem genannten Agenten zum Abrufen eines Datenelements von einer Tabellenstelle, die durch eine erste der genannten Vielzahl von Reihen und eine der genannten Spalten definiert wurde;
• Mittel, um die genannte Instrumentation aufzufordern, alle genannten Datenelemente aus der genannten Tabelle in der genannten ersten Reihe abzurufen;
• Mittel, um von der genannten Instrumentation alle der genannten Datenelemente in der genannten ersten Reihe zu empfangen;
• einen internen Speicherbereich zum Speichern der genannten Datenelemente aus der genannten ersten Reihe; und
• Mittel zum Senden der genannten Datenelemente von der genannten durch die genannte erste Reihe und die genannte eine Spalte definierten Tabellenstelle an den genannten Agenten.

8. Ein Gerät, nach Anspruch 6, dadurch gekennzeichnet, daß der genannte Subagent folgende Mittel umfaßt:
• Mittel, um von dem genannten Agenten eine zweite Anforderung zu empfangen, von einer durch die genannte erste Reihe und eine andere der genannten Spalten definierten Tabellenstelle ein Datenelement abzurufen;
• Mittel, um aus dem internen Speicherbereich des genannten Subagenten das genannte Datenelement von der genannten durch die genannte erste Reihe und die genannte andere Spalte definierten Tabellenstelle abzurufen;
• und Mittel, um an den genannten Agenten das genannte Datenelement von der genannten Tabellenstelle zu senden, die durch die genannte erste Reihe und die genannte andere Spalte definiert wird.

9. Ein Gerät nach Anspruch 8, wobei die genannte mindestens eine Tabelle erste bis letzte Reihen und erste bis letzte Spalten aufweist, das genannte durch den genannten Subagenten gekennzeichnete Gerät folgende Mittel umfaßt:
• Mittel zum Empfangen einer Anforderung, ein Datenelement von einer durch die genannte letzte Reihe und eine der genannten Spalten definierten Tabellenstelle abzurufen;
• Mittel, um durch das genannte Datenelement von der genannten, durch die genannte letzte Reihe und die genannte eine Spalte definierten Tabellenstelle zu antworten;
• Mittel zum Empfangen einer Anforderung zum Abrufen des nächsten Datenelements;
• Mittel, mit dem die genannte Instrumentation aufgefordert wird, die Datenelemente in der nächsten Reihe abzurufen;
• Mittel, um von der genannten Instrumentation die Datenelemente in der ersten Reihe zu empfangen; und
• Mittel, um durch das genannte Datenelement von der genannten durch die genannte erste Reihe und die genannte folgende Spalte definierten Tabellenstelle zu antworten.

10. Ein Gerät nach Anspruch 8, bei dem das genannte Gerät ein Router ist.

## Revendications

1. Un procédé de récupération d'éléments de données à partir d'une table dans un dispositif à Protocole de Gestion de Réseau Simple SNMP, par un gestionnaire, ledit dispositif comprenant des moyens (36, 40), comprenant un agent ou un agent et un sous-agent, et une instrumentation (42), ladite instrumentation ayant au moins une table ayant une pluralité de lignes et une pluralité de colonnes, ladite au moins une table ayant une pluralité d'éléments de données dans des emplacements de table correspondants définis par ladite pluralité de lignes et ladite pluralité de colonnes, ledit procédé étant caractérisé en ce qu'il comprend les étapes ci-après :
a) ledit agent (36) reçoit une requête émise par ledit gestionnaire en vue de récupérer au moins un élément de données depuis un emplacement de table défini par l'une desdites lignes et au moins l'une desdites colonnes;
b) lesdits moyens émettant une requête à destination de ladite instrumentation en vue de récupérer la totalité desdits éléments de données à partir de ladite table dans ladite une ligne;
c) lesdits moyens recevant depuis ladite instrumentation la totalité desdits éléments de données dans ladite une ligne;
d) lesdits moyens mémorisant lesdits éléments de données depuis ladite une ligne dans une aire de stockage interne; et
e) lesdits moyens répondant avec ledit au moins un élément de données à partir dudit emplacement de table défini par ladite une ligne et ladite au moins une colonne.

2. Le procédé selon la revendication 1, dans lequel lesdits moyens (36, 40) sont un agent (36).

3. Le procédé selon la revendication 1, dans lequel lesdits moyens (36, 40) comprennent un agent (36) et un sous-agent (40), ledit procédé étant caractérisé en ce qu' :
• il comprend, entre l'étape a et l'étape b, la sous-étape consistant à :
l'envoi par ledit agent d'une requête à destination dudit sous-agent pour récupérer un élément de données à partir d'un emplacement de table défini par ladite une ligne et ladite au moins une colonne;
• l'étape b est effectuée par ledit sous-agent;
• l'étape c est effectuée par ledit sous-agent;
• l'étape d est effectuée par ledit sous-agent;
ledit procédé étant en outre caractérisé en ce qu'
• il comprend, entre l'étape 4 et l'étape 5, la sous-étape consistant à :
envoyer, par ledit sous-agent, audit agent ledit un élément de données depuis ledit emplacement de table défini par ladite ligne et ladite colonne;
• l'étape e est effectuée par ledit agent.

4. Le procédé selon la revendication 3, comprenant en outre les étapes ci-après :
• ledit sous-agent reçoit dudit agent une deuxième requête de récupération d'un élément de données depuis un emplacement de table ayant été défini par ladite ligne et une autre desdites colonnes
• ledit agent récupérant, à partir de ladite aire de stockage interne de sous-agent, ledit élément de données depuis ledit emplacement de table défini par ladite première ligne et ladite autre colonne;
• ledit sous-agent envoyant audit agent ledit élément de données depuis ledit emplacement de table défini par ladite première ligne et ladite autre colonne.

5. Le procédé selon la revendication 2 ou la revendication 4, ladite au moins une table ayant des première à dernière lignes et des première à dernière colonnes, ledit procédé comprenant en outre, pour ledit agent selon la revendication 2 ou ledit sous-agent selon la revendication 4, les étapes ci-après :
• réception d'une requête en vue de la récupération de l'élément de données subséquent, suivant l'élément de données dans un emplacement de table défini par l'une desdites colonnes et ladite dernière ligne;
• faire requête à ladite instrumentation de récupérer les éléments de données dans la ligne suivante;
• recevoir depuis ladite instrumentation les éléments de données se trouvant dans ladite première ligne;
• faire réponse par l'élément de données, à l'emplacement de table défini par ladite première ligne et la colonne subséquente.

6. Un dispositif à Protocole de Gestion de Réseau Simple SNMP comprenant un agent (36) et une instrumentation (42), ladite instrumentation ayant au moins une table ayant une pluralité de lignes et une pluralité de colonnes, ladite au moins une table ayant une pluralité d'éléments de données se trouvant dans des emplacements de table correspondants, définis par ladite pluralité de lignes et ladite pluralité de colonnes, ledit agent de récupération desdits éléments de données à partir de ladite table étant caractérisé par :
• des moyens de réception de ladite requête émise par ledit gestionnaire en vue de récupérer au moins un élément de données depuis un emplacement de table défini par une première parmi ladite pluralité de lignes et au moins l'une desdites colonnes;
• des moyens pour faire requête à ladite instrumentation de récupérer la totalité desdits éléments de données depuis ladite table dans ladite première ligne;
• des moyens pour recevoir de ladite instrumentation la totalité desdits éléments de données dans ladite première ligne;
• une aire de stockage interne pour stocker lesdits éléments de données à partir de ladite première ligne; et
• des moyens pour émettre ledit au moins un élément de données depuis ledit emplacement de table défini par ladite première ligne et ladite au moins une colonne.

7. Un dispositif selon la revendication 6, caractérisé par un sous-agent placé entre ledit agent et ladite instrumentation, ledit sous-agent correspondant avec l'instrumentation et comprenant les moyens ci-après :
• un moyen pour recevoir une requête à partir dudit agent, pour récupérer un élément de données à partir d'un emplacement de table défini par une première parmi ladite pluralité de lignes et l'une desdites colonnes;
• des moyens pour faire requête à ladite instrumentation de récupérer la totalité desdits éléments de données à partir de ladite table dans ladite première ligne;
• des moyens pour recevoir de ladite instrumentation la totalité des desdits éléments de données dans ladite première ligne;
• une aire de stockage interne pour stocker lesdits éléments de données à partir de ladite première ligne; et
• des moyens pour envoyer audit agent ledit élément de données venant dudit emplacement de table défini par ladite première ligne et ladite colonne.

8. Un dispositif selon la revendication 6, caractérisé par le fait que ledit sous-agent comprend les moyens ci-après :
• des moyens pour recevoir dudit agent une deuxième requête destinée à récupérer un élément de données depuis un emplacement de table ayant été défini par ladite première ligne et une autre desdites colonnes;
• des moyens pour récupérer à partir de ladite aire de stockage interne de sous-agent ledit élément de données depuis ledit emplacement de table défini par ladite première ligne et ladite autre colonne;
• et des moyens pour envoyer audit agent ledit élément de données depuis ledit emplacement de table défini par ladite première ligne et ladite autre colonne.

9. Un dispositif selon la revendication 8, ladite au moins une table ayant des première à dernière lignes et des première à dernière colonnes, le dispositif étant caractérisé par le fait que ledit sous-agent comprend les moyens ci-après :
• des moyens pour recevoir une requête destinée à récupérer un élément de données depuis un emplacement de table défini par ladite dernière ligne et l'une desdites colonnes;
• des moyens pour répondre par ledit élément de données à partir dudit emplacement de table défini par ladite dernière ligne et ladite colonne;
• des moyens pour recevoir une requête de récupération de l'élément de données subséquent;
• des moyens pour faire requête à ladite instrumentation de récupérer les éléments de données se trouvant dans la ligne subséquente;
• des moyens pour recevoir de ladite instrumentation les éléments de données se trouvant dans la première ligne; et
• des moyens pour répondre par ledit élément de données depuis ledit emplacement de table défini par ladite première ligne et ladite colonne suivante.

10. Un dispositif selon la revendication 8, dans lequel ledit dispositif est un routeur.
